# EUROPEAN PATENT APPLICATION

(11) **EP 1 693 255 A1**
(43) Date of publication of application: **23.08.2006**
(21) Application number: 04818884.1
(22) Date of filing: 15.11.2004
(51) Int. Cl.: B60R 21/04

(54) **IMPACT ABSORBING BODY**

(30) Priority: 19.11.2003 JP 2003388684; 12.05.2004 JP 2004141980
(71) Applicant: Hayashi Engineering Inc., Nagoya-shi, Aichi 460-0013 (JP)
(72) Inventor: Taniguchi, Takahiko, c/o Hayashi Engineering Inc., Nagoya-shi, Aichi 460-0013 (JP); Araga, Toshitaka, c/o Hayashi Engineering Inc., Nagoya-shi, Aichi 460-0013 (JP); Kajiwara, Toranosuke, c/o Hayashi Engineering Inc., Nagoya-shi, Aichi 460-0013 (JP)
(74) Representative: Winter, Brandl, Fürniss, Hübner Röss, Kaiser, Polte Partnerschaft Patent- und Rechtsanwaltskanzlei
(86) International application number: PCT/JP2004/016950
(87) International publication number: WO 2005/049386

(57) **Abstract**

An impact absorbing body disposed below feet of an occupant of an automobile and interposed between a body panel and a floor covering laid apart from the body panel toward a cabin, configured such that a plurality of load supporting portions, having V-lettered cross-sections forming grooves arranged parallel to a face facing toward the cabin of said body panel, are disposed side by side along the face facing toward the cabin of said body panel and neighboring load supporting portions are connected by a flat-plate-shaped bridge portion.

## Description

### TECHNICAL FIELD

The present invention relates to an impact absorbing body disposed under the feet of the occupant of an automobile as interposed between the body panel and the floor covering laid down on the side apart from the body panel toward the cabin.

### BACKGROUND ART

Conventionally, a floor covering, such as a floor carpet, is laid on the floor face of a passenger vehicle so as to decorate the interior. The floor carpet to be laid down is generally molded to fit the floor face. This is because there are formed concavities and convexities on the floor face of the passenger vehicle out of structural necessity of the vehicle, hence the need for being given the shape to fit the shape of the floor face.
When a molded floor carpet is laid on the floor panel, a raising material made of felt is sometimes partially placed at such places as the foot rest portion under the feet of the occupant. The raising material fills up the small unevenness on the floor panel and flattens the floor and also contributes to improvement in sound absorption.

Recently, it has become popular to have a tibia pad for absorbing impact interposed between the carpet and the floor panel as extended from the portion under the feet of the occupant toward the front. Studies are being made on the tibia pad in order to absorb and relax impact occurring at the time of accident of collision of the automobile so as to reduce injuries to the shank and under it of the occupant. There is disclosed, in Japanese Published Unexamined Patent Application (JP-A) No. H10-329762, an impact absorbing body interposed between a floor covering and a floor panel at the foot rest portion on which the feet of the front seat occupant of the automobile body are mounted. The impact absorbing body is made of an energy-absorbing material and generally arranged side by side with raising materials.
Such an impact absorbing body is required to have a capability of absorbing energy against a compressive load occurring at the time of collision. Therefore, there is frequently used a molding, so-called a beads-foam-molding, which is produced first, by preparing a preliminarily foamed beads by adding a foaming agent to a polypropylene resin or a polystyrene resin material and, then, by molding the material under heat in a molding die, allowing the material to foam in the meantime. In JP-A- H06-183293, there is disclosed an impact absorbing body produced with use of the beads-foam-molding. The beads-foam-molding is obtained by adding a foaming agent to granules of polystyrene resin, polypropylene resin, or the like, filling the material into a molding machine having required cavities, and heating the material by steam heating or the like so that individual granules are allowed to foam and to be fusion-bonded into the molding. At this time, the molding is set to have a density of around 0.02 - 0.06 g/cm³ and a compressive strength of around 0.1 - 1.5 MPa when the compressive strain is 50%.

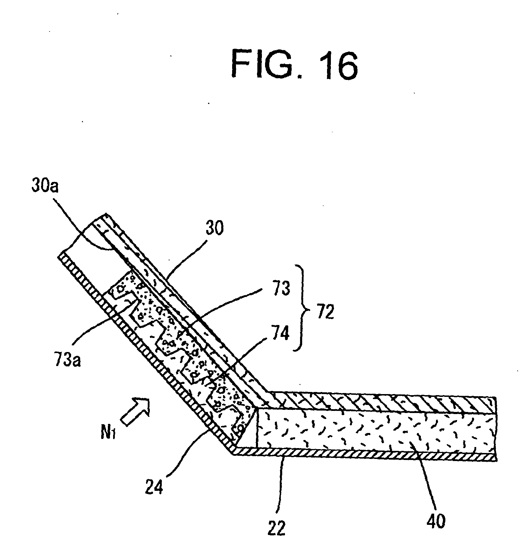

As a typical example of the impact absorbing body, there is disclosed, in JP-A-2002-331895, an automobile body structure provided with an energy absorbing body (tibia pad) disposed close to a portion of the dashboard connected with the toe-board. In FIG 16 are shown energy absorbing bodies 91 - 94 disclosed in the publication.
Further, as a proposal for improving the energy absorbing performance of the tibia pad, there is disclosed, in JP-A-2003-127796, an impact absorbing floor spacer for an automobile, of which the side toward the interior of the cabin is made of a hard foamed plastic material and formed flat so as to be laid on the floor face constituting a portion under the feet of the automobile occupant seat, or on that floor face and a forwardly extended portion therefrom, and the side toward the floor face is provided by a hard foamed plastic molding having a honeycomb structure, a slit structure, or a projected structure and having, when this side is laid down, a contact face with the floor set to 10% - 60%.

### DISCLOSURE OF THE INVENTION

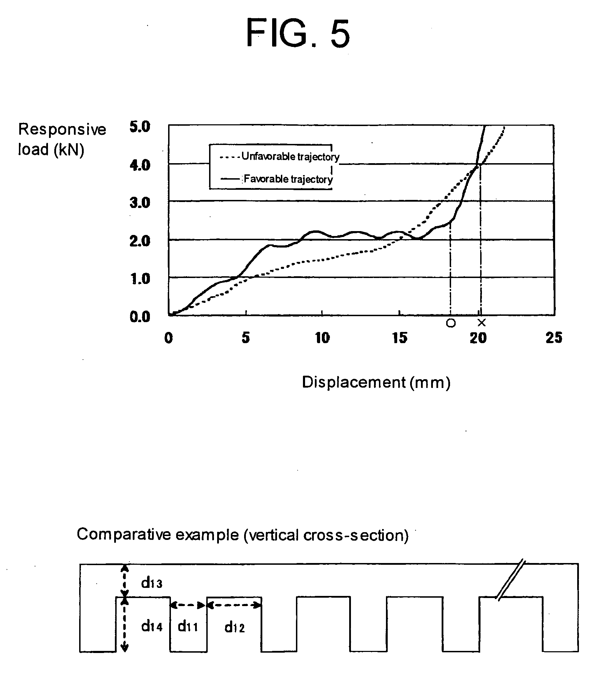

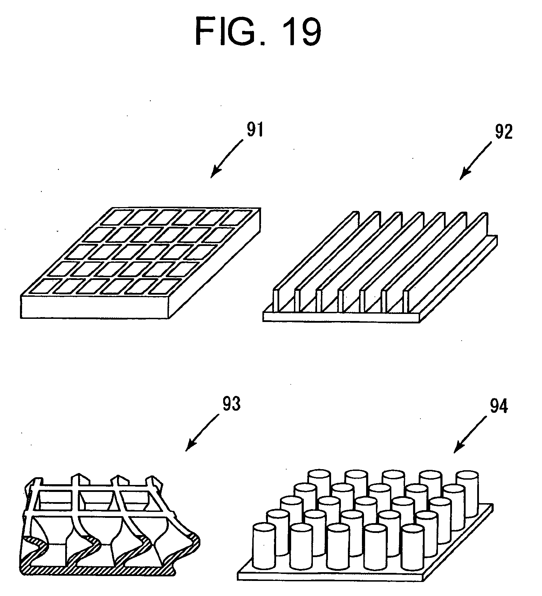

In JP-A-2003-127796, it is stated that the impact absorbing performance is improved by setting the contact of the tibia pad with the floor panel (floor surface) to be above 10% and below 60% (of the projected area), and an example of honeycomb structure, an example of slit structure, and an example of projected structure as shown in FIG 19 are mentioned therein.
By having a simulation model of the bottom of lower leg (heel), of which the sectional area is about 90 cm², subjected to a collision in the thickness direction of a tibia pad at a high speed exceeding 3.0 m/sec, a responsive load impressed on the simulation model of the bottom of lower leg (heel) through the tibia pad was measured, and the graph of FIG. 5 was plotted with the length of deformation (displacement) taken along the axis of abscissas and with the responsive load taken along the axis of ordinates. As indicated by the continuous line in the graph, while the displacement length was relatively smaller, the responsive load rose steeply according as the displacement length was increased, and thereafter a flat region lasted long while the responsive load did not rise. Under such conditions, the impact energy is adequately absorbed at the time when the collision occurred and, hence, this type of tibia pad can be said to be a tibia pad excellent in impact absorbing performance. Therefore, it can be said to be beneficial if a configuration of the tibia pad exhibiting such performance can be designed.

After looking into prior art, we inventors found that, though the contact surface as stated in the prior art has a possibility of constituting one factor for securing the above mentioned performance, it is not one and only one factor to determine the impact absorbing performance. In the case of the honeycomb structure, slit structure, and projection structure stated in the embodiments of JP-A-2003-127796, the width of the projections is formed to be 20% or less of the thickness of the tibia pad and it is intended to obtain a good impact absorbing performance by making use of the deformation of the projections. However, this means that the impact is intended to be absorbed by very thin projections. Since the walls and posts in the structure are liable to be broken by buckling when it is subjected to an incoming impact, its impact absorbing performance can sometimes be deteriorated. Further, even under daily loads, it is possible that the wall or post of the structure is accidentally broken so that the impact absorbing performance is lowered.
To prevent occurrence of such buckling or breakage at the time of inputting of an impact and also to prevent the tibia pad under the feet of the occupant from being dented even if it is pushed down by the shoes, the wall or post may be constructed to be thicker, but then, the deformation of the projections will become insufficient and the impact absorbing performance will be lowered.

The present invention has been made to overcome the above mentioned problem and it is a purpose of the present invention to provide an impact absorbing body capable of stably attaining a good impact absorbing performance at the time of inputting of an impact.

In order to attain the above mentioned purpose, the present invention provides an impact absorbing body disposed below feet of an occupant of an automobile and interposed between a body panel and a floor covering laid apart from the body panel toward a cabin, characterized in that a plurality of load supporting portions, having V-lettered cross-sections forming grooves arranged parallel to a face facing toward the cabin of said body panel, are disposed side by side along the face facing toward the cabin of said body panel and neighboring load supporting portions are connected by a flat-plate-shaped bridge portion.
A plurality of the load supporting portions, arranged side by side along the face facing toward the cabin of the body panel, have their neighboring load supporting portions connected by a flat-plate-shaped bridge portion. Owing to this configuration, the load supporting portions are fixed in position, the responsive load is stabilized even if the same are subjected to repeated loads, and the impact absorbing performance thereof is stabilized. Further, each of the load supporting portions has V-lettered cross-sections forming grooves arranged parallel to the face facing toward the cabin of the body panel. At inputting of an impact, a force compressing the impact absorbing body substantially in its thickness direction (the direction perpendicular to the face facing toward the cabin of the body panel and the face facing toward outside the automobile of the floor covering) is exerted. However, since the load supporting portions has the V-lettered cross-section, such a function is provided thereby that the responsive load is evenly divided by the left and right leg and hence it does not occur that the load is concentrated on only one side of the load supporting portions having the V-lettered cross-section, so that the form thereof is maintained. Thus, even if such a load exerting compression on the impact absorbing body in a direction somewhat deviated from its thickness direction, a stabilized buffering performance is exhibited. Further, since the present impact absorbing body can produce the same deformation at repeated inputting of impact, it is made possible also from this point to stably provide a good impact absorbing performance at the time of inputting of impact.

Here, the body panel under the feet of the occupant is considered to be constituted on the floor panel, the under part of the dashboard, a combination of them, or the like. The above mentioned floor covering is considered to be constituted of a carpet, a mat, a combination of them, or the like. The grooves in the load supporting portions may be disposed parallel to the face facing toward the cabin of the body panel or disposed in a parallelly curved manner, and any of which is included in the present invention. Each of the load supporting portions may be arranged parallel to each other or arranged parallel to each other in a curved manner, and any of which is included in the present invention.

The above mentioned neighboring load supporting portions may also be of such a configuration that have their ends on the side toward the floor covering are connected by the above mentioned flat-plate-shaped bridge portion. Then, the form of the impact absorbing body is further stabilized, and therefore, a good impact absorbing performance can be provided in a stabilized manner over a long time.

When the present impact absorbing body is formed by using a foamed synthetic resin material, the amount of absorbed impact energy can be increased and, hence, the impact absorbing performance can be improved. The synthetic resin materials forming the bridge portion and the load supporting portions may be of the same type of synthetic resin or of different types of synthetic resin.
The impact absorbing body can of course be formed of a synthetic resin material not foamed, rubber, and the like.

As the results of experiments in which simulated tests of collision event are repeated, it is found, when the thickness of each load supporting portions is 6 - 15 mm, the thickness of the bridge portion is 3 - 15 mm, the length of the bridge portion on the side toward the cabin, in the direction parallel to the face facing toward the cabin of the body panel and in the direction perpendicular to the grooves formed in the load supporting portions, is 20 - 50 mm, and the wedge angle on the cross section formed by the load supporting portions with a V-lettered cross-section is 5 - 60°, that it hardly buckles and sufficiently deforms at the inputting of impact and, hence, a good impact absorbing performance can be provided stably over a still longer time.

Meanwhile, the impact absorbing body may also be provided by molding an aggregate of cylindrical resin granules produced by foaming a synthetic resin material and forming the foamed material into a cylindrical shape.
If an impact absorbing body is provided by a beaded-foamed molding, a sound wave is reflected from the surface of the impact absorbing body and not absorbed by the impact absorbing body. Therefore, the entering sound such as the road noise or engine noise incident into the cabin is reflected from the surface of the impact absorbing body and put into the ear of the occupants. If a sound absorbing capability is provided for the impact absorbing body, it is preferable in view of improvement of stillness within the occupant cabin.
Since the impact absorbing body of the present impact absorbing structure is provided by a molding of an aggregate of cylindrical resin granules, which are provided therein with through holes larger than each of the foams foamed, the impact absorbing body as a whole is made into a porous product. Since the sound waves of the incoming sound incident into the cabin are taken into the holes within the cylindrical resin granules and caused to make irregular reflection, the energy of the entering sound is absorbed and the sound is absorbed. Accordingly, it becomes possible to improve the sound absorbing performance and sound insulating performance.

### BRIEF DESCRIPTION OF THE DRAWINGS

FIG 1 is a sectional view of a main part showing, in vertical cross-section, a main part of a passenger vehicle having an impact absorbing body of an embodiment of this invention installed thereon.
FIG 2 is a perspective view of a main part showing an exploded view of an impact absorbing body in its state installed on a floor panel of a passenger vehicle.
FIG 3 is a vertical sectional view of the impact absorbing body shown on a cross-section cut along the line A1 - A1 of FIG 2.
FIG 4 is a drawing showing a state of progress of deformation corresponding to compressive displacement of an impact absorbing body.
FIG 5 is graph showing results of responsive load against compressive displacement developed on a simulation model of a bottom part of lower leg (heel).
FIG 6 is a perspective view showing an external appearance of a variation of an impact absorbing body.
FIG 7 is a perspective view showing an external view of a cylindrical resin granule.
FIG 8 is a schematic sectional view showing a portion under the feet of front seat occupant of the floor of a passenger vehicle having both the front and back seats.
FIG 9 is a perspective view showing an external view of a variation of a cylindrical resin granule

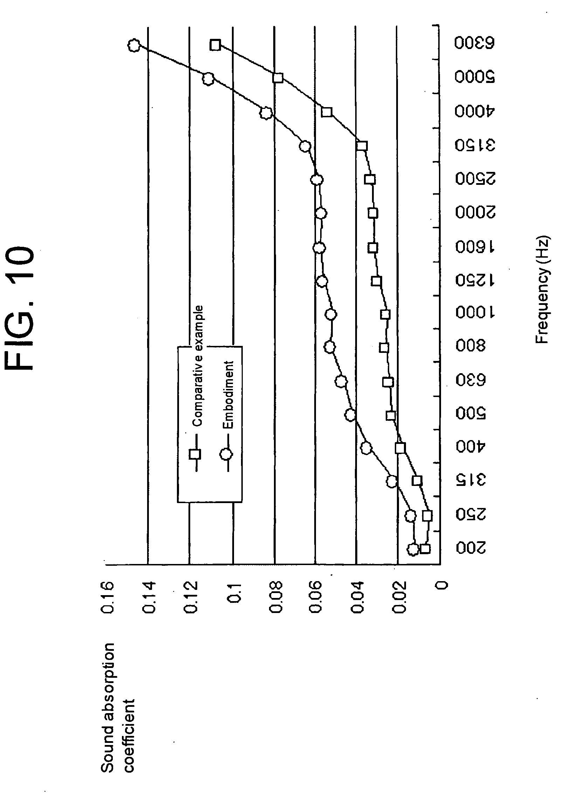

FIG 10 is a graph showing results of experiments for confirming changes in sound absorption coefficient due to a roughening treatment made on the inner face of a cylindrical resin granule.
FIG 11 is a graph showing results of experiments for confirming changes in sound absorption coefficient due to formation of the cross section of a cylindrical resin granule into an elliptic shape.
FIG 12 is a drawing schematically showing manners of arrangement of cylindrical resin granules within an impact absorbing body.
FIG 13 is a drawing showing results of experiments for confirming changes in sound absorption coefficient due to different arrangement of cylindrical resin granules.
FIG 14 is a graph showing results of measurement of sound absorption coefficient on test samples of impact absorbing bodies prepared by molding cylindrical resin granules such that their inner faces are roughened, cross-sections are flattened, and they are oriented obliquely.
FIG 15 is a sectional view of a main part showing, in vertical cross-section, a main part of a passenger vehicle provided with an impact absorbing body, whose face facing toward outside the vehicle is roughened, interposed between the body panel and the floor covering.
FIG 16 is a sectional view of a main part showing in vertical cross-section a main part of a passenger vehicle provided with an impact absorbing body, laminated with a felt, interposed between the body panel and the floor covering.
FIG 17 is a drawing showing various variations of load supporting portions.
FIG 18 is a perspective view showing a variation of an impact absorbing body.
FIG 19 is a perspective view showing an external view of a conventional impact absorbing body.

### BEST MODE FOR CARRYING OUT THE INVENTION

(1) FIRST EXEMPLARY EMBODIMENT:

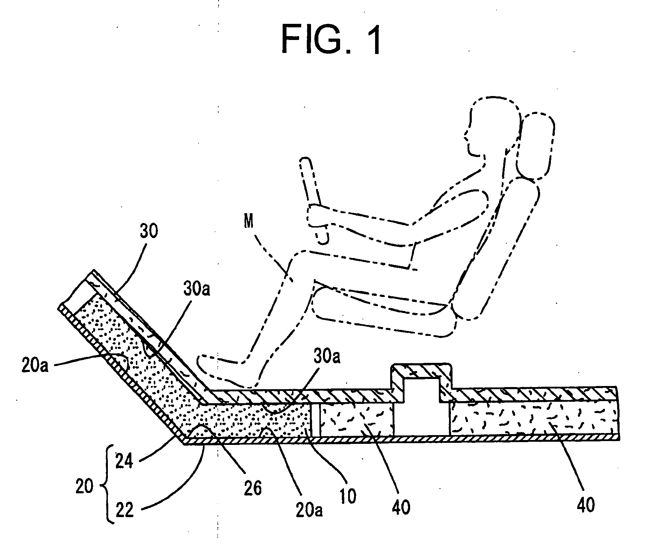

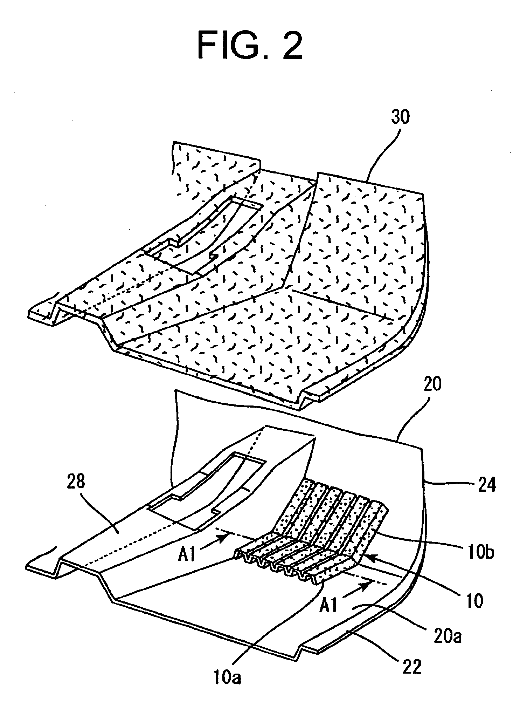

In FIG 1, there is shown a portion under the feet of a front-seat occupant M on a floor of an automobile having a front and a back seat. Under the feet of the occupant of the automobile, there is provided a body panel 20 and, on the side held apart from the body panel 20 toward the cabin, there is laid down a floor carpet (floor covering) 30. The body panel 20 has a flat portion 22 extended, substantially horizontally, rearward from the bottom of the feet of the front-seat occupant M and a rising wall portion 24 rising obliquely frontward and, from the front edge of the flat portion 22 so as to define its boundary with an engine room. Incidentally, the flat portion 22 is also called a floor panel and the rising wall portion 24 is also called a dash-panel. Further, there are provided a center console 28 dividing the driver's seat and the assistant driver's seat, and others, as shown in FIG 2. The floor carpet 30 is disposed along the shape of the body panel 20, as extended substantially horizontally in a rearward direction from the bottom of the front-seat occupant M and extended forward and raised obliquely upward from the bottom of the feet of the front-seat occupant M. A tibia pad 10 as an impact absorbing body of the present invention is interposed between the body panel 20 and the floor carpet 30 as laid on the flat portion 22 of the body panel and on the rising wall portion 24. The floor carpet 30 formed into a required shape is laid on the tibia pad 10.

With principal aims to provide decorative effects, sound absorbing effects, sound insulating effects, and so on, the floor carpet 30, which is molded into a form fit along the profile of the flat portion 22 of the body panel and the rising wall portion 24 so as to cover all over the floor of the occupant cabin, is laid on the body panel 20. For the floor carpet 30, a tuft carpet produced by having raised pile stitched into a ground fabric, a needle punch carpet produced by needling nonwoven webs so as to interlink the fibers together, and the like is used. The backside 30a of the floor carpet 30 is lined with a thin sheet of a thermoplastic resin material with a low melting point, such as low density polyethylene and ethylene vinyl acetate. By press forming the lining material, under heated and plasticized condition, into a required shape, the shape to fit onto the body panel 20 of the automobile can be provided.

When an automobile comes into a head-on collision, a strong impact, exerting a push in an obliquely upward and backward, is given to the boundary 26 between the flat portion 22 and the rising wall portion 24 of the body panel, where the feet of the front-seat occupant M are placed. Hence, a strong impulsive load comes to be imposed on the feet of the occupant M. Therefore, a material for absorbing the impact, called a tibia pad, is disposed at the boundary 26 as interposed between the body panel 20 and the floor carpet 30. Thus, even if the feet of the occupant M are caused to jump against the rising wall portion 24 at the time of occurrence of a collision, it becomes possible to have the impact to the feet absorbed by the tibia pad 10.
The tibia pad 10 is disposed, in the automobile occupant cabin, at least at one of the portions under feet of the drivers' seat and under the feet of the assistant driver's seat. Of course, a single impact absorbing body may be disposed as extended from the portion under the feet of the driver's seat to the portion under the feet of the assistant driver's seat.

In the present embodiment, where there is interposed no tibia pad between the body panel 20 and the floor carpet 30, there is properly provided a raising material 40. As the raising material 40, a porous and highly sound absorbing material is preferable and, therefore, a fabric felt of various types is most suitable. As a preferred example, a synthetic fiber felt manufactured, first, by piling up polyester fibers with a fiber diameter of 1 - 5 d and a fiber length of 20 - 70 mm and, then, by partially allowing the fibers to be fused-bonded together to provide a density of 0.04 - 0.1 g/cm³, can be mentioned. Here, making the gap between the tibia pad 10 and the raising material 40 as small as possible is preferred in point of capability of preventing sound from entering through the gap.
The tibia pad 10 is provided by integrally forming its horizontal portion 10a, which is horizontally laid on the portion under the feet of the occupant, and an oblique portion 10b, which is slanted a predetermined angle with respect to the horizontal portion 10a and disposed along the rising wall portion 24 obliquely raised, in front of the horizontal portion, toward its boundary with the engine room. The tibia pad 10 may be fixed to the body panel 20 by clips or may be glued onto the backside of the floor carpet 30. The raising material 40 may also be fixed to the body panel 20 by clips or glued onto the backside of the floor carpet 30.

As the material of the tibia pad 10, a foamed material is preferred in view of sound absorption. A material produced by foaming a synthetic resin material is much preferred. While an impact is transmitted from the tibia pad 10 to the feet of the occupant through the floor carpet 30 at the time of a collision, the impact to the feet of the occupant can then be lowered because the foamed synthetic resin material having a relatively low rigidity absorbs the impact. As the synthetic resin to be foamed, a thermoplastic resin is preferred in view of its easiness of being molded and such as polypropylene, polystyrene, and polyethylene can be used. Polypropylene is especially preferred in view of its difficulty of being broken, shape restoration, and heat resistance. In molding the material into a shape of impact absorbing body, a foam plastic material obtained by foaming a plastic material by mixing a foaming agent therein may be extruded from a predetermined mold so as to be molded, or a beaded plastic material may be impregnated with a foaming agent to be preliminarily foamed and, then, the material may be filled into a metallic mold and heated so as to be foamed further and molded. As the foaming agents, volatile foaming agents generating hydrocarbons such as butane and pentane, inorganic foaming agents such as ammonia carbonate generating carbon dioxide etc., and the like may be used.

In the present embodiment, a case where a foamed-bead molding is used will be described, where the molding is produced by preparing pre-foamed resin granules by impregnating a synthetic resin material with a foaming agent and molding an aggregate of the resin granules by allowing them to be fused together. In this case, as the pre-foamed resin granules prepared by impregnation of a foaming agent, such as B-BLOCK_(EPP) and STYLO-DIA (EPS), both being trade names of products manufactured by Kabushiki Kaisha JSP, can be used.
It is preferred that the density of the molding, controlled by the foaming factor, is within the range of around 0.02 - 0.09 g/cm³ and, in terms of its mechanical property, that having a 50%-compression-strength of around 0.1 - 0.5 MPa is preferred. As to the size of the tibia pad, the thickness, width, and depth (along the surface) are set to be around 30mm, around 400mm, and around 300mm, respectively.

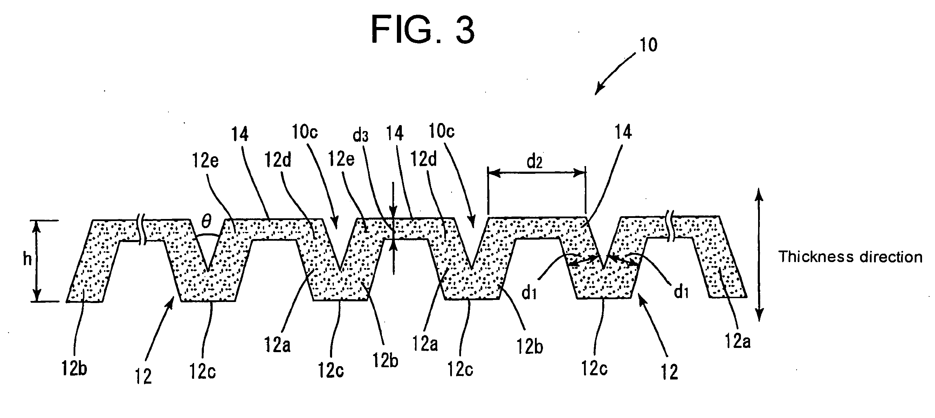

FIG 3 shows a vertical section of the tibia pad at the position of the line A1 - A1 in FIG 2. The tibia pad 10 is formed such that a plurality of V-lettered supporting legs 12 (load supporting portions) each thereof having a V-lettered section, forming grooves 10c running in parallel with the face 20a facing toward the cabin of the body panel 20, are arranged side by side along the face 20a facing toward the cabin of the body panel 20, and each of the neighboring V-lettered supporting legs 12 are connected to be fixed by a bridge portion 14 in a flat plate shape. When a pair of the supporting legs of each V-lettered supporting leg 12 are denoted as a left-hand supporting leg 12a and a right-hand supporting leg 12b, it can be said that the neighboring V-lettered supporting legs 12 are fixed by connecting the right-hand supporting leg 12b of the V-lettered supporting leg to the left of the drawing, and the left-hand supporting leg 12a of the V-lettered supporting leg to the right of the drawing, by the bridge portion 14.
The tibia pad 10 of the present embodiment is arranged such that the V-lettered supporting leg disposed at the left-hand edge has only its right-hand supporting leg 12b, while the V-lettered supporting leg disposed at the right-hand edge has only its left-hand supporting leg 12a. As a matter of course, both the left-hand and right-hand edges of the tibia pad may be provided by V-lettered supporting legs formed of the supporting legs 12a, b, or, otherwise, by the bridge portions 14.

When the tibia pad 10 of the above described configuration is interposed between the body panel 20 and the floor carpet 30, the base portions 12c of each of the V-lettered supporting legs 12 are positioned so as to oppose the face 20a facing toward the cabin of the body panel, while the top ends 12d, e of each of the supporting legs 12a, b are positioned to oppose the face 30a of the floor carpet 30 facing toward outside the automobile.
Further, in the present embodiment, each of the neighboring V-lettered supporting legs 12 have their ends 12d, e on the side toward the floor carpet connected by flat-plate-shaped bridge portion 14. More specifically, the tibia pad 10 is such a shape that is formed by bending a sheet of plate. Since, the end portions on the side toward the carper are connected by the bridge portion in fixing the neighboring load supporting portions together, the shape of the impact absorbing body is further stabilized and therefore it can stably provide a better impact absorbing performance over a long time.

Further, each of the V-lettered supporting legs 12 and the bridge portions 14 are formed into a shape stretched from the flat portion 22 of the body panel to the rising wall portion 24 and arranged to have a continuous long size forwardly extended from the portion under the feet of the occupant to the front portion. Accordingly, in the molding process of the tibia pad, it can be easily removed from the mold, and in addition, the tibia pad, integrally formed of the oblique portion 10b and the flat portion 10a such that the former is obliquely extended from the latter, has no possibility of being broken when it is transported before being build onto an automobile.
The wall thickness d₁ of each V-lettered supporting leg 12 is preferred to be within the range of 6 - 15 mm, while the wall thickness d₃ of the bridge portion 14 is preferred to be within the range of 3 - 15 mm. The thickness d₁ not smaller than 6 mm and the thickness d₃ not smaller than 3 mm prevents the tibia pad 10 from easily buckling so that the impact absorbing performance can be stabilized. Whereas, the thickness d₁ not larger than 6 mm and the thickness d₃ not larger than 15 mm allows the tibia pad, when subjected to an impact, to sufficiently deform so that the impact absorbing performance can be bettered.

The length d₂ of the face facing toward the cabin of the bridge portion 14 in the direction parallel to the face 20a facing toward the cabin of the body panel 20 and in the direction perpendicular to the groove 10c formed in the V-lettered supporting legs 12 is preferred to be within the range of 20 - 50 mm. This length will be called "span." When the span d₂ is made larger than 20 mm, the degree of freedom of deformation of the V-lettered supporting legs becomes sufficiently high and a better impact absorbing performance can be provided. Whereas, when the span d₂ is made smaller than 50 mm, the tibia pad hardly causes buckling and a stabilized impact absorbing performance can be provided.
Further, the wedge angle θ on the cross-section of the groove 10c formed between the V-lettered supporting legs 12 is preferably set to be within the range of 5 - 60° and much preferably set to be within the range of 20 - 40°. If the wedge angle θ is set to be 5° or above, or much preferably, set to be 20° or above, the degree of freedom of deformation of the V-lettered supporting legs becomes higher and a better impact absorbing performance can be provided. Whereas, if the wedge angle 8 is set to be 60° or below, or much preferably set to be 40° or below, the tibia pad is prevented from easily buckling and therefore a stabilized impact absorbing performance can be provided.

The above mentioned dimensions of the tibia pad are such that were determined through measurements of responsive loads occurring when impactive deformations were actually given to tibia pads. To be more concrete, a simulation model of the lower leg bottom portion having a sectional area of 90 cm² was subjected to a collision in its thickness direction at a speed not less than 3.0 m/sec and the responsive loads impressed on the simulation model of the lower leg bottom portion through the tibia pad were measured and recorded on a graph with the deformation (displacement) length L1 (unit: mm) taken along the axis of abscissas and the responsive load L2 (unit: kN) taken along the axis of ordinate. Based on the graph and results of observation of the manner of deformation of the tibia pad, various parameters d₁ - d₃, and θ were determined. The solid line in the graph of FIG. 5 indicates the results of record of responsive loads against displacements of one of the tibia pads to which the present invention was applied and the dotted line in the graph indicates the results of record of responsive loads against displacements of a tibia pad as a comparative example, having its vertical cross-section indicated at the bottom of the graph. Here, the tibia pad of the comparative example is configured such that a plurality of load supporting portions, each having a rectangular section, are arranged side by side along the face facing toward the cabin of the body panel, while upper edge portions of the load supporting portions are each fixed to a flat plate portion in a flat-plate shape. The thickness d₁₁ of each load supporting portion is set to be 12mm, the distance d₁₂ between adjoining load supporting portions to 18 mm, the thickness d₁₃ of the flat plate portion to 12 mm, and the height d₁₄ of each load supporting portion to 18 mm.

In the tibia pad to which the present invention is applied, as indicated by the dotted line in the graph of FIG 5, the responsive load rises relatively greatly according as the displacement increases while the displacement is relatively small (around 0 - 7 mm in the graph), and thereafter, the range where the responsive load is kept below 3.0 kN and it becomes flat (the range within which the displacement is from 7 to 18 mm or so in the graph) is lasting long, and thus, the impact energy generated at the time of collision is suitably absorbed. Further, in the present tibia pad, the flat portion continues until the absorbed energy by the tibia pad reaches a value of 30J, where the energy is obtained by integrating the responsive load L2, dependent on the displacement L1, with respect to the displacement L1, or, in other words, the absorbed energy by the tibia pad defined by the area of the portion in the graph surrounded by the axis of abscissas, the trajectory curve, and a straight line L1 = constant, and thus a large amount of impact energy is absorbed at the time of collision. Incidentally, the displacement in the graph where the absorbed energy has reached 30J (approximately 18 mm in the graph) is indicated by the circle O.
In the case of the comparative example, as indicated by the dotted line in the graph of FIG 5, the responsive load is gradually rising according as the displacement is increased, the trajectory is rising monotonously from left to right with the responsive load increased, and the point where the responsive load exceeds a value of 3.0 kN is reached relatively earlier, and therefore, the impact absorbing performance of it is lower than that of the tibia pad to which the present invention is applied. Further, in the case of the comparative example, the displacement becomes greater until the absorbed energy by the tibia pad reaches 30J, which energy is obtained by integrating the responsive load L2, dependent on the displacement L1, with respect to the displacement L1, and therefore, the comparative example is unable to absorb impact energy greater than 30J at the point where the responsive load exceeds 3.0 kN. Also from this point, its impact absorbing performance is lower than that of the tibia pad to which the present invention is applied. Incidentally, the displacement at the point where the absorbed energy has reached 30J (approximately 20 mm in the graph) is indicated by x.

Further, if the responsive load becomes lower according as the displacement is increased after the displacement has exceeded a value, it means that buckling has occurred in the tibia pad and, therefore, it is preferred that the responsive load will not decrease according as the displacement is increased.
In the case of the present embodiment, the tibia pad 10 is configured such that the responsive load occurring when the tibia pad is compressed in its thickness direction (the vertical direction in FIG 3) has reached 30J becomes smaller than 3.0 kN. Such a tibia pad can be provided by adjusting the above mentioned parameters d₁ - d₃ and θ.

With regard to the thickness d₁ of each V-lettered supporting leg 12, when it becomes too large, the responsive load at the point where the absorbed energy reaches 30J exceeds 3.0 kN, whereas when it becomes too small, the V-lettered supporting leg becomes easily broken and the responsive load at the point where the absorbed energy reaches 30J exceeds 3.0 kN.
With respect to the thickness d₃ of the bridge portion 14, when it becomes too large, the deformation of the V-lettered supporting legs are controlled more strictly than necessary and, hence, the impact energy comes to be absorbed only by the compressive action and the responsive load where the absorbed energy reaches 30J exceeds 3.0 kN. On the other hand, when d₃ becomes too small, the bridge portion comes to be easily broken, and, hence, the fixing capability of the supporting leg is lowered and the responsive load where the absorbed energy reaches 30J exceeds 3.0 kN.

With respect to the span d₂ of the bridge portion, if it becomes too large, the distance between the V-lettered supporting legs becomes too large and, hence, the responsive load at the point where the absorbed energy becomes 30J exceeds 3.0 kN, whereas, if it becomes too small, the V-lettered supporting legs are prevented from making deformation so that the responsive load at the point where the absorbed energy becomes 30J exceeds 3.0 kN.
With respect to the wedge angle θ of the V-lettered supporting legs, if it becomes too large, the V-lettered supporting legs come to be buckled easily before being compressed or deformed and, hence, the responsive load at the point where the absorbed energy becomes 30J exceeds 3.0 kN, whereas, if it becomes too small, the degree of freedom in making deformation of the V-lettered supporting legs becomes too small and, hence, the responsive load at the point where the absorbed energy becomes 30J exceeds 3.0 kN.

As the results of experiments, preferred ranges of d₁- d₃ and θ allowing the responsive load at the point where the absorbed energy reaches 30J to be smaller than 3.0 kN are found to be, as described above, d₁ is 6 - 15 mm, d₃ is 3 - 15 mm, d₂ is 20 - 50 mm, and θ is 5 - 60° (much preferably, 20 - 40°).
Since, as seen from the above, the absorbed energy as large as 30J can be absorbed while the responsive load is lower than 3.0 kN, the present embodiment provides a good impact absorbing performance.

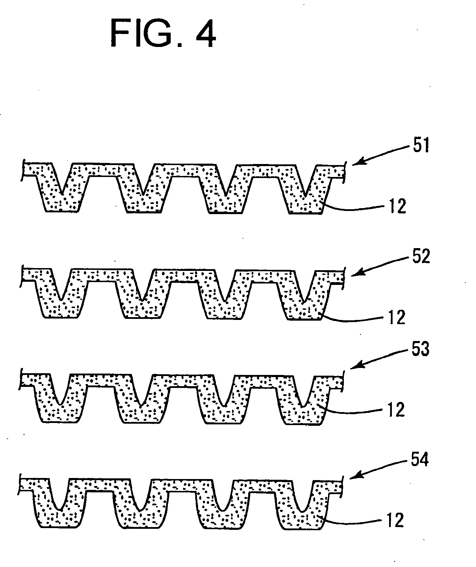

As to manners of deformation of the tibia pad observable by visual inspection, those hardly producing buckling or collapse of the leg portions and constantly exhibiting the same manner of deformation even if subjected to repeated tests are preferable.
As a result of observation by visual inspection, it has been observed that the tibia pad with the present invention applied thereto has exhibited, during the course of its being deformed by compression up to the point where the absorbed energy thereby has reached 30J, such manner of deformation as shown in FIG 4 from top down, in the order of 51, 52, 53, and 54, and when the compressive force is released, exhibited its manner going back from bottom up, in the order of 54, 53, 52, and 51. Besides, stabilized and unchanged manner of deformation has been observed even if the test has been repeated many times. This means that the V-lettered supporting legs of the tibia pad have made bending deformation in their unbroken range under the compressive deformation and the release of the compressive force. Namely, it means that the present tibia pad stably absorbs the impact energy.

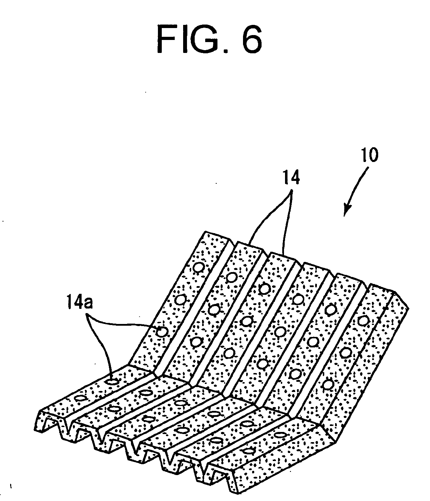

With regard to the orientation in installing the V-lettered supporting legs 12, having it oriented in the front-back direction of the automobile as shown in FIG 2 is preferred to having it oriented in the left-right direction of the automobile. This is because of such mechanical reasons that, in the case of head-on collision of the automobile, an impact is produced in the front-back direction, and, therefore, the V-lettered supporting legs, if oriented in left-right direction of the automobile, receive at the time of occurrence of an impact such a force that flattens the V-lettered supporting legs in their cross-sectional direction; whereas, if the V-lettered supporting legs are oriented in front-back direction of the automobile, the V-lettered supporting legs hardly receive at the time of occurrence of an impact such a force that flattens the V-lettered supporting legs in their cross-sectional direction. In addition, there is such a reason that, when the V-lettered supporting legs are oriented in the front-back direction, even if the V-lettered supporting legs are pushed through the carpet by shoes of the occupant or especially by pointed heels or the like, concavity or convexity is hardly produced thereon.
Further, since sounds such as a road noise from the road on which the automobile is running or an engine noise from the engine room are liable to get inside, there may be provided a plurality of through holes 14a of a diameter approximately 5 - 10 mm in the flat-plate-shaped bridge portion 14 in the direction perpendicular to the bridge portion (in the vertical direction in the drawing) as shown in the tibia pad 10 in FIG 6. Then, the sounds such as the road noise and the engine noise entering the cabin are introduced onto the backside of the floor carpet and absorbed thereby by the action of resonance decay. Accordingly, the sound absorbing and sound insulating performance can be improved.
According to the present invention, as described above, a good impact absorbing performance at the time of incoming of an impact can be provided in a stabilized manner.

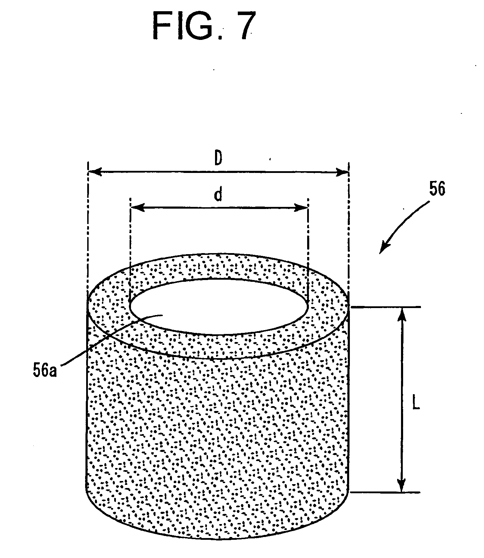

(1) SECOND EXEMPLARY EMBODIMENT:
While road noises and engine noises enter the cabin, when the impact absorbing body is made of a foamed-bead molded body of a foamed plastic material, the sound wave is reflected from the surface of the impact absorbing body and, hence, the entering sounds of the road noises and the engine noises are not absorbed by the impact absorbing body. In order to keep interior of the cabin quiet, it is preferred that the entering sounds are absorbed by the impact absorbing body.
After making studies, it is found, if a plurality of cylindrical resin granules 56, which are obtained by foaming a plastic material and forming the same into a cylindrical shape as shown in FIG 7, are aggregated and molded into an impact absorbing body, that a good sound absorbing performance is obtained therefrom.
The individual cylindrical resin granule 56 can be obtained by adding a foaming agent to a synthetic resin material and shaping the material into a cylindrical form while allowing it to foam. As the synthetic resin to be foamed, a thermoplastic resin is preferred in view of easiness in molding, for which such resins as polypropylene, polystyrene, and polyethylene can be used. As the foaming agent, the above mentioned volatile foaming agents, inorganic foaming agents, and the like can be used.

The above mentioned cylindrical resin granule can be produced by using known art.
For example, such a thermoplastic resin as polypropylene may be fed into a kneading extrusion molding machine with a heater so that the resin is melted by heating with the heater, the molten resin may be extruded by the extruder from a mold having a ring shaped extrusion outlet into a cylindrical form, and the cylindrical resin may be cut to a predetermined length, and thus, cylindrical granules (pellets) being sufficiently small and having uniform diameter may first be prepared. Then, a plurality of the thus obtained granules may be cast into an autoclave to impregnate the granule with a predetermined amount of a foaming agent in an atmosphere of a predetermined pressure and temperature. Then, by taking out the plurality of granules to an ambient atmosphere under a normal pressure, a plurality of foamed cylindrical resin granules may be provided. Of course, a plurality of cylindrical resin granules may also be provided by mixing a foaming agent into a thermoplastic resin material, extruding the foamed thermoplastic resin material from a mold provided with a ring-shaped extruding outlet into a cylindrical shape, and cutting the resin cylinder to a predetermined length.
Since the cylindrical resin granule 56 is provided with through holes 56a larger than the individual foam that is foamed, the impact absorbing body formed of such cylindrical resin granules on the whole is formed into a porous body. Since sound waves of the sounds entering the cabin are then caused to make irregular reflection upon entering the through holes 56a of the cylindrical resin granules 56, the energy of the entering sounds is absorbed by the impact absorbing body so that the sound is absorbed.

The cylindrical resin granule 56 is given a cylindrical form with an inner diameter d of2 - 4 mm, an outer diameter D (D>d) of 4 - 6 mm, and a length L of 3 - 6 mm. These parameters are the parameters that affect the impact absorbing performance and sound absorbing performance of the impact absorbing body; by setting the inner diameter d, outer diameter D, and the length L to be within the above mentioned values, the impact absorbing body can be provided with good impact absorbing capability and sound absorbing capability. As such a cylindrical resin granule, PEPP (trade name for porous EPP) made by Kabushiki Kaisha JSP can be used. Of course, the cylindrical resin granule may, other than the cylindrical cross-section, have a flattened, substantially elliptic, cross-section.
When a plurality of cylindrical resin granules 56 are used for producing the impact absorbing body, first by filling the plurality of cylindrical resin granules 56 into a predetermined mold adjusted to the shape of the impact absorbing body and then by introduced a high-temperature vapor into the mold to heat the interior of the mold so that the cylindrical resin granules 56 may be melted and bonded together, the impact absorbing body can be manufactured.

It is preferred that the impact absorbing body manufactured by using cylindrical resin granules has a density of 0.02 - 0.1 g/cm³. By setting the density to be 0.02 g/cm³ or above, a sufficient reactive force can be provided and, hence, the absorbed energy sufficiently increases. Therefore, the impact absorbing body is prevented from collapsing and generating an excessive reactive force. Whereas, if the density is set to be 0.1 g/cm³ or below, it is prevented that an excessive reactive force is generated at an earlier stage. Besides, the sound absorbing performance is bettered.
When an impact absorbing body is manufactured by molding an aggregate of a plurality of cylindrical resin granules of foamed polypropylene into a molding having an inner diameter of 2 - 4 mm, an outer diameter of 4 - 6 mm, and a length of 3 - 6 mm, the density of the thus obtained impact absorbing body becomes 0.03 - 0.05 g/cm³.

The above mentioned impact absorbing body can be manufacture through various methods.
For example, a plurality of foamed cylindrical resin granules 56 are filled into a mold, which is provided with a plurality of steam bents and formed into the shape of an impact absorbing body, and then the mold is clamped. Here, the steam bent provided in the mold is made smaller than whichever of the outer diameter or the length of the cylindrical resin granule that is the smaller, so that the cylindrical resin granules filled into the mold may not come out through the vapor bents. Then, vapors elevated in temperature by a specific heater to such a temperature as to allow the thermoplastic resin forming the cylindrical resin granules to be melted are introduced into the mold. Then, the interior of the mold can be heated and the cylindrical resin granules 56 are melted to be bonded together and, thus, the impact absorbing body can be produced. If the mold is opened after the interior of the mold has been cooled down, the produced impact absorbing body can be taken out. Thus, an impact absorbing body molded from an aggregate of a plurality of cylindrical resin granules, which are prepared by foaming a plastic resin material and shaping the same into a cylindrical form, can be manufactured.
Here, since the cylindrical resin granule is provided with a through hole, by introducing high-temperature vapors into the mold, the entire space within the mold can be easily heated and the impact absorbing body can be easily produced.

If the above described cylindrical resin granules are used for molding the tibia pad 10 as shown in FIG 2, the sound absorbing performance can be improved and the level of stillness of the cabin can be improved. Further, by forming the impact absorbing body such that a plurality of the load supporting portions, each thereof having a V-lettered cross-section, forming grooves disposed parallel to the face facing toward the cabin of the body panel, are arranged side by side along the face facing toward the cabin of the body panel, and such that the neighboring load supporting portions are connected by a flat-plate-formed bridge portion, a good impact absorbing performance when subjected to an input impact can be stably obtained.
Even when the impact absorbing body is provided by such an impact absorbing body that is molded from an aggregate of a plurality of cylindrical resin granules, preferable ranges of the above described parameters d₁- d₃ and θ are given, for the reasons mentioned above, as follows: the wall thickness d₁ of each V-lettered supporting legs 12 is 6 - 15 mm, the thickness of the bridge portion 14 d₃ is 3 - 15 mm, the length of the bridge portion on the side of the cabin d₂ is 20 - 50 mm, and the wedge angle on the cross-section of the groove formed by the V-lettered supporting legs θ is 5 - 60° (much preferably, 20 - 40°).

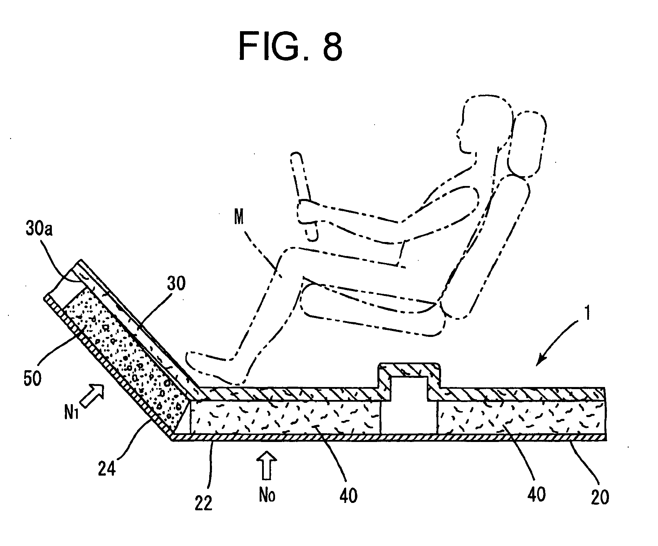

Further, as shown in FIG 8, an impact absorbing body 50 formed by using cylindrical resin granules 56 may be interposed between the rising wall portion 24 of the body panel 20 and the floor carpet 30. Also in this embodiment, a fancy floor carpet 30 is laid, as an interior material, as spread over the flat portion 22 of the body panel and the rising wall portion 24 to decorate the cabin. Here, on the backside of the floor carpet 30, there are disposed the impact absorbing body 50, as located forwardly of the vicinity of the boundary between the flat portion 22 of the body panel 20 and the rising wall portion 24, and a raising material 40, which is porous and has a sound absorbing property, as located at the remaining portion. Thus, the floor carpet 30, the raising material 40, and the impact absorbing body 50 constitute an on-floor lying member 1. The lining of the floor carpet 30 serves the purpose of an adhesive agent when the impact absorbing body 50 and the raising material 40 are laminated on the backside 30a of the floor carpet 30.

The raising material 40 can be made of the same material as that used in the first embodiment. If both the impact absorbing body 50 and the raising material 40 are adhesively attached to the lining of the floor carpet 30, it is favorable because the impact absorbing body 50 and the raising material 40 do not shift their positions. Further, if the gap between the impact absorbing body 50 and the raising material 40 is narrowed down or, much preferably, if the impact absorbing body 50 and the raising material 40 are arranged in touch with each other, it is favorable because penetration of a sound through the gap can then be prevented.
Here, there is a tendency that much road noise No comes in through the flat portion 22 and much engine noise N₁ comes in through the rising wall portion 24. Since the present impact absorbing body 50 is provided by a molding of cylindrical resin granules, it, in corporation with the raising material 40 having a good sound absorbing performance, absorbs noise No, N₁ to thereby improve the stillness of the cabin.
If, the individual cylindrical resin granules are provided with the features as mentioned below, the sound absorbing performance and sound insulating performance can further be improved.

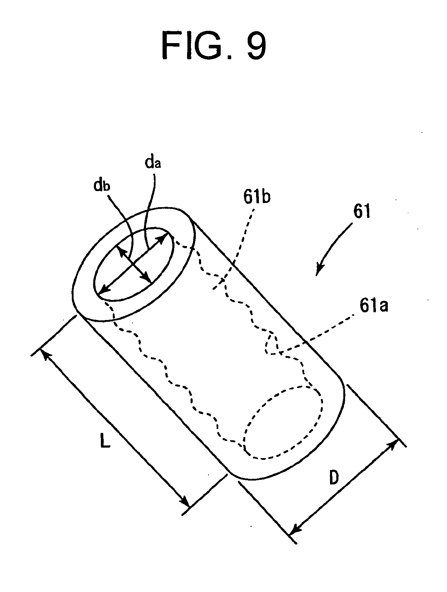

(2-1) Roughening the inner face of the cylindrical resin granule:
It has been acknowledged by test samples that, if a process for roughening the inner surface is performed on the inner surface, by for example forming a pattern 61a of concavity and convexity on the inner surface, of a foamed cylindrical resin granule 61 as shown in FIG 9 and, then, a plurality of such cylindrical resin granules 61 with their inner surfaces roughened are aggregated and molded into the impact absorbing body, the sound absorbing performance of the impulse absorbing body can be favorably improved. This is presumed due to the fact that, if the inner face of the cylindrical resin granule is roughened, the sound waves of the entering sound are caused to produce irregular reflections on the inner face of the cylindrical resin granule so that the energy of the entering sound comes to be attenuated.
As a process for roughening the inner face of the cylindrical resin granule, it can for example be considered to elevate the degree of foam formation in the resin (by increasing the content of the foaming agent) so that convexities and concavities are formed on the inner face of the cylindrical resin granule.

A test sample of the embodiment (of which the air permeability in accordance with JIS L1096 (applicable to all the samples mentioned below) was set to 44 cc/cm²/sec) was prepared by molding such granules as obtained by uniformly forming a convexity-and-concavity pattern of a radius of 0.1 mm on the inner side of cylindrical resin granules of polypropylene resin (of which the outer diameter D = 6.0 mm, inner diameter d = 4.0 mm, and length L = 4.0 mm) into a body with a thickness of 20 mm and a density of 0.04 g/cm³. Also, a test sample of a comparative example (of which the air permeability was set to 41 cc/cm²/sec) was prepared by molding cylindrical resin granules of the same resin material and size as the embodiment and having the inner side of the cylinder smoothed, into a body with the same size as the embodiment (a thickness of 20 mm and a density of 0.04 g/cm³). Thereafter, evaluation of both test samples was carried out by measuring difference therebetween in the vertical-incidence sound absorption coefficient. As the result, the vertical-incidence sound absorption coefficient of the test sample of the embodiment with the inner face of the cylinder roughened was better than that of the test sample of the comparative example in each of frequency ranges, and thus the effect of improvement in the sound absorbing performance by roughening the cylinder inner surface has been verified.

(2-2) Flattening the cylindrical resin granule:
It was experimentally confirmed that the sound absorbing performance can be favorably improved by flattening the inner diameter of a cylindrical resin granule 61 so as to have an ellipticity expressed as {(major axis dₐ - minor axis d_{b})/major axis dₐ)} = 10 - 70% as shown in FIG 9, and thus forming the internal hollow portion 61 b of the cylindrical resin granule 61 into a shape having an elliptic cross-section. This effect is presumed due to the fact that the energy of the entering sound into the hollow portion of the cylindrical resin granule is attenuated by a suitably increased air-flow resistance of the impact absorbing body and also due to the fact that the energy of the entering sound is attenuated by an increased number of irregular reflections occurring on the inner side of the cylindrical resin granule owing to the flattened configuration.

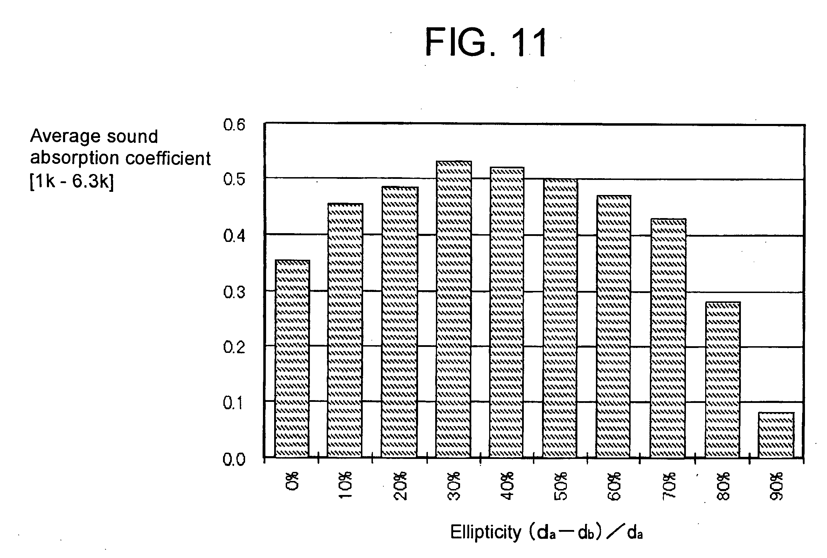

Test samples of the embodiment (of which the air permeability was set to 40 - 50 cc/cm²/sec) were prepared by using flattened cylindrical resin granules of polypropylene resin (of which the outer diameter D = 6.0 mm, inner diameter d = 4.0 mm, and length L = 4.0 mm), arranging such that the cylindrical resin granules have less than 100% of ellipticities, as defined above, and are varied stepwise, and molding such granules into a body with a thickness of 20 mm and density of 0.04 g/cm³. Further, a test sample (of which the air permeability was set to 41 cc/cm²/sec) was prepared by using non-flattened cylindrical resin granules and molding such granules into the same shape as the test sample of the embodiment (with a thickness of 20 mm and density of 0.04 g/cm³). Then, both of the test samples were evaluated by measuring the difference therebetween in the vertical-incidence sound absorption coefficient (averaged on the range of 1000 - 6300 Hz). As the result, as shown in FIG 11, an effect of improvement in sound absorption coefficient attained by bringing the ellipticity to around 10 - 70% was confirmed, in contrast to the comparative example in which cylindrical resin granules with the ellipticity set to 0% were used.

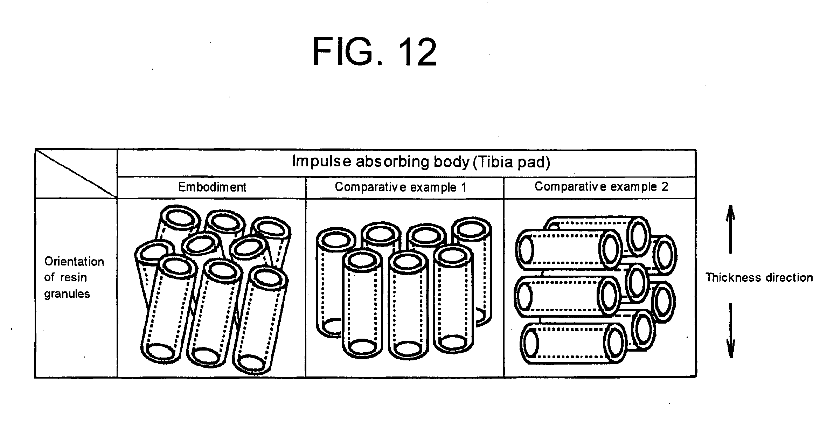

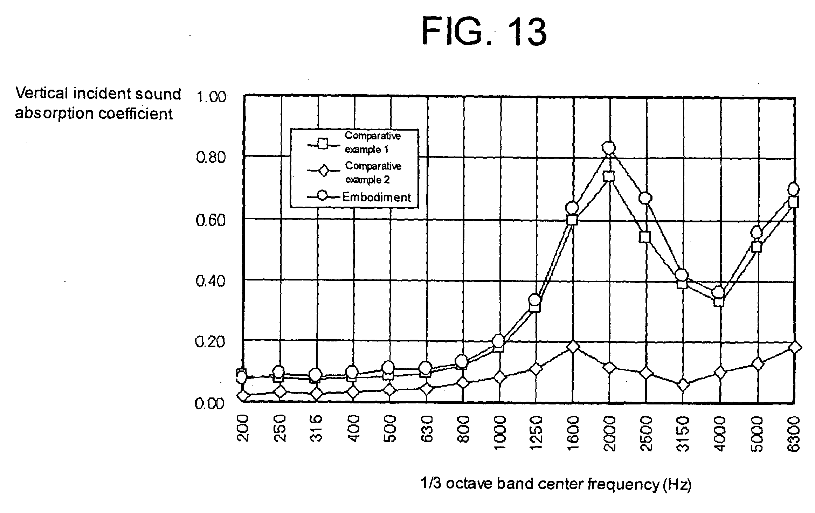

(2-3) Oblique arrangement of cylindrical resin granules:
It has been experimentally confirmed that the sound absorption coefficient can be favorably improved if, in an impact absorbing body provided by molding cylindrical resin granules, a majority of the cylindrical resin granules are arranged to be deviated from the thickness direction of the impact absorbing body.
Test samples of the embodiment and comparative examples 1, 2 (of which the air permeability was set to 40 - 50 cc/cm²/sec) were prepared by arranging cylindrical resin granules made of a polypropylene resin material (of which the outer diameter D = 6.0 mm, inner diameter d = 4.0 mm, and length L = 4.0 mm) as shown in FIG 12 and molding them into moldings having a thickness of 20 mm and a density of 0.04 g/cm³/sec. In the case of the embodiment, a majority of the cylindrical resin granules were arranged to be deviated from the direction of thickness of the test sample and then molded into the impact absorbing body of the embodiment. Here, the oblique angles are set to be randomly from 0° to less than 90° (average oblique angle is 45°). In the comparative example 1, a majority of the cylindrical resin granules were orderly arranged parallel to the direction of thickness of the test sample. In the comparative example 2, a majority of the cylindrical resin granules were orderly arranged perpendicularly to the direction of thickness of the test sample. As the results, as shown in FIG 13, it was confirmed that the sound absorption coefficient was the highest with the test sample of the embodiment and, then, the sound absorption coefficient were lowered in the order of the comparative example 1 and the comparative example 2. With the test sample of the comparative example 2 having a perpendicular arrangement to the direction of thickness, it is presumed that the sound absorption coefficient was lowered because sound waves were hardly taken into the cylindrical resin granules. Further, with the test sample of the comparative example 1 having a parallel arrangement to the direction of thickness, it is presumed that the sound absorption coefficient was lowered because the proportion of sound waves reflected by the inner wall of the cylindrical resin granules became smaller.

(2-4) Combination of the above (2-1) - (2-3):

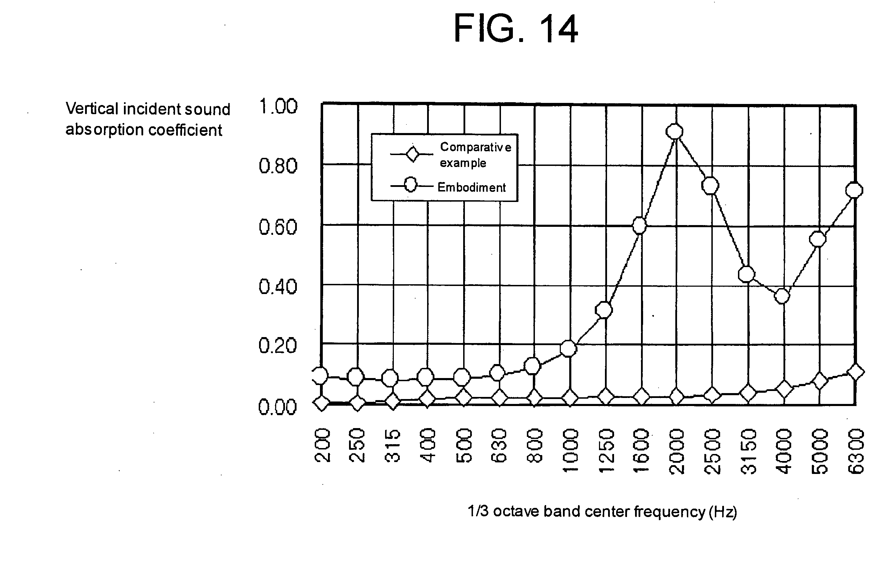

FIG 14 shows results of measurement of the vertical-incidence sound absorption coefficient and evaluation on a test sample obtained by flattening cylindrical resin granules of polypropylene resin (of which the outer diameter D = 6.0 mm, inner diameter d = 4.0 mm, and length L = 4.0 mm), which have been subjected to the above described process of "roughening the inner face of the cylindrical resin granule," to an ellipticity of 30%, arranging a majority of the cylindrical resin granules within a test sample, formed by using the flattened cylindrical resin granules, to be deviated from the direction of the thickness of the test sample, and molding such a sample into the test sample of the impact absorbing body with a thickness of 20 mm and a density of 0.04 g/cm³. Further, beaded resin granules (in a spherical form with a diameter of 3 mm) of the same resin as the embodiment were molded into a shape the same as that of the test sample of the embodiment (of a thickness of 20 mm and a density of 0.04 g/cm³), and thus a test sample of a comparative example (of which the air permeability was substantially 0 cc/cm²/sec) was prepared.
In the present embodiment, owing to the effect of combination, a sound absorption coefficient more excellent than the sound absorption coefficient of the embodiments (2-1) - (2-3) was observed. On the other hand, in the comparative example not using cylindrical resin granule, it is found that the energy of sound waves was hardly absorbed.

(2-5) Air permeability of the impact absorbing body:
Through the measurement of the sound absorption coefficient as mentioned above, it has been known that, if an impact absorbing body is arranged to have an air permeability of 2.0 cc/cm²/sec or higher, the impact absorbing body can exhibit a high sound absorbing performance.
Meanwhile, in the case of a laminate of the present impact absorbing body laminated on the backside of a floor carpet, a better sound absorbing performance was provided when the air permeability of the laminate of the carpet and the present impact absorbing body is as relatively small as above 0 cc/cm²/sec and below 90 cc/cm²/sec. This is due to the effect that is explained by the classical double-wall theory in the insulation of sound. More specifically, the body panel serves as a first sound insulating wall and the backside of the floor carpet held at a predetermined distance therefrom through the impact absorbing body serves as a second sound insulating wall against incidence of a noise from the direction of the body panel of the automobile, so that an excellent sound insulating characteristic is exhibited.

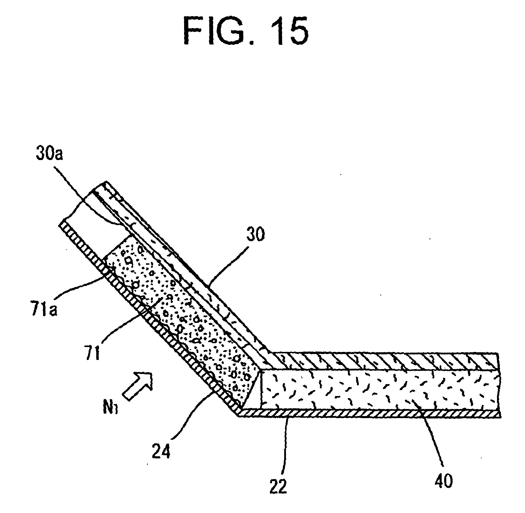

(2-6) Controlling of squeaking sound due to rubbing between the impact absorbing body and the body panel:
When the face facing toward outside the automobile of an impact absorbing body is roughened, the sound absorbing performance can be improved and occurrence of a squeaking sound can be suppressed because of decrease in the contact surface between the impact absorbing body and the body panel. This can also be said of the impact absorbing body of the first embodiment which is not using cylindrical resin granules.
In the case of the impact absorbing body 71 shown in FIG 15, its side 71 a toward outside the automobile, i.e., its backside, has been subjected to a process for turning it into a rough surface of a depth, for example, of around 1 - 10 mm. By roughening the face facing toward outside the automobile of the impact absorbing body, the entering area of sound waves into the impact absorbing body is increased and, hence, the sound absorption coefficient is increased. At the same time, the contact area between the impact absorbing body and the body panel is decreased and, hence, occurrence of squeaking sound is suppressed. Incidentally, as a method for roughening the face facing toward outside the automobile of the impact absorbing body, such a method can, for example, be used as to roughen the face facing toward outside the automobile of the molding die for use in molding an aggregate of resin granules into a shape of an impact absorbing body. Then, the face facing toward outside the automobile of the impact absorbing body can be easily turned into a rough surface.

Further, if an impact absorbing body is produced by molding an aggregate of cylindrical resin granules into a shape having convexities and concavities on its face facing toward outside the automobile and piling a sheet of felt on the surface having the convexities and concavities thereon, then the sound absorbing performance is improved and occurrence of squeaking sound between the impact absorbing body and the body panel can also be suppressed more certainly. This can also be said of the first embodiment not using cylindrical resin granules.
The impact absorbing body 72 shown in FIG 16 includes the molding 73 which has an aggregate of cylindrical resin granules molded into a shape having convexities and concavities on the face 73a facing toward outside the automobile and a sheet of felt 74 laminated on the face 73a thereof facing toward outside the automobile such that the convexities and concavities formed on the molding are filled up thereby. In the present impact absorbing body 72, the surface area between the molding and the felt is increased due to formation of the convexities and concavities on the face facing toward outside the automobile of the molding made of cylindrical resin granules. This leads to an increase in the entering area of sound waves and, hence, the sound absorbing performance is improved. Since the air permeability of the felt is much greater than the air permeability of the molding made from cylindrical resin granules, the sound absorbing performance can be improved by the increase of the surface area of the molding. In order to further improve the sound absorbing performance, it is preferred that the convexity of the convex and concave shape is formed into a trapezoidal shape. Further, since the sound absorbing performance of the sound absorbing molding 73 of molded cylindrical resin granules is combined with the sound absorbing performance of the felt 74, a higher sound absorbing performance is achieved. Further, the squeaking sound due to rubbing between the impact absorbing body 72 and the body panel can be eliminated more certainly.
Incidentally, the molding 73 and the felt 74 can be adhesively bonded together by an adhesive or hot-melt adhesive. Further, by inserting the felt into the molding die before the molding 73 is molded, the molding 73 and the felt 74 can be molded integral by the molding.

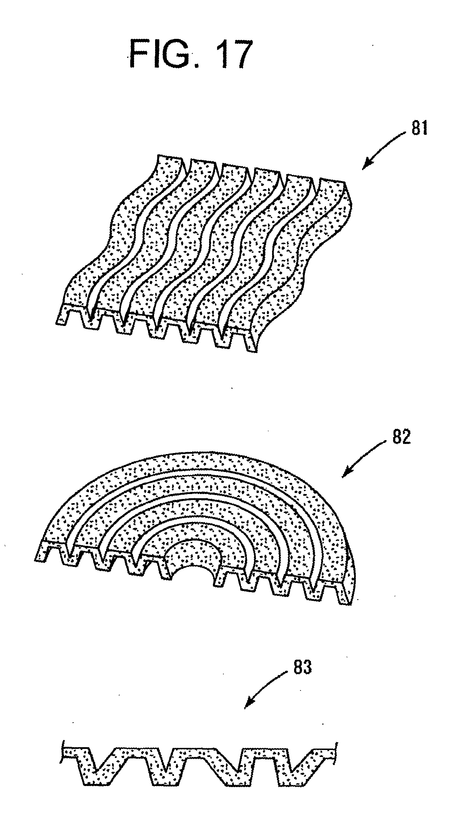

(3) Various variations:
Various variations of the present invention are possible.
As motor vehicles to which the present invention is applicable, such as road vehicles, out-of-road vehicles, and passenger vehicles can be considered. As the places of installation of the impact absorbing body, such places as under the feet of the front-seat occupant and under the feet of the rear-seat occupant can be considered.
The load supporting portions with V-lettered cross-section as shown in FIG 17 may be such as the impact absorbing body 81 (shown in perspective view) having a plurality of S-letter shaped load supporting portions arranged side by side, or the impact absorbing bodies 82 (shown in perspective view) having a plurality of circular-arc-shaped, semi-circular shaped, or disk-shaped load supporting portions arranged side by side. Such an arrangement is advantageous because, even when a load is applied in left-right direction at the time of a collision, the impact energy can be properly absorbed.
The load supporting portions having V-lettered cross-sections can have the load supporting portions bilaterally asymmetric as indicated by the impact absorbing bodies 83 (indicated by cross-sections).

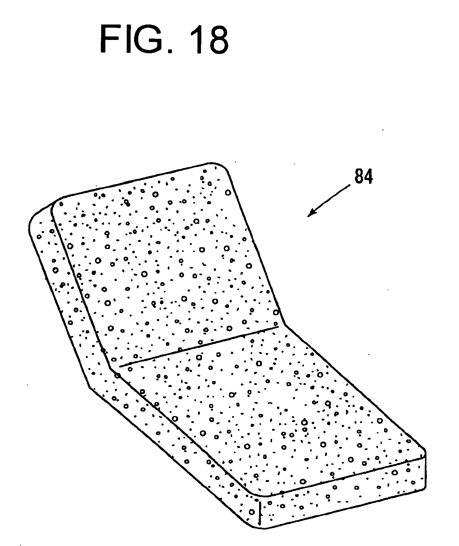

(3-1) Variation of impact absorbing body formed by using cylindrical resin granules:
An impact absorbing body provided by molding an aggregate of cylindrical resin granules, which are produced by forming a foamed resin material into a cylindrical shape, can provide, even if neighboring load supporting portions thereof are not arranged to be connected by a flat-plate-shaped bridge portion, such an effect as to achieve good sound absorbing and sound insulating capabilities while maintaining its good impact absorbing performance. Thus, an impact absorbing body can be provided by molding cylindrical resin granules into an impact absorbing body having a rectangular cross-section, such as the impact absorbing body 84 shown in FIG 18. Incidentally, if description is made with reference to FIG 1, the impact absorbing body 84 is interposed between the flat portion 22 of the body panel and the rising wall portion 24 and stretched from the top of the flat portion 22 to the top of the rising wall portion 24. In this case, the floor covering includes the floor carpet 30, the raising material 40, and the impact absorbing body 84.
Even in the case of the above impact absorbing body 84, if the impact absorbing body is molded under the various conditions described in the second embodiment, the sound absorbing performance and the sound insulating performance can further be improved while a better impact absorbing performance is maintained.
An embodiment with the above mentioned impact absorbing body 84 applied thereto will be described below.

(3-1-1) Test vehicle and evaluation method:
As a test vehicle, a sedan passenger vehicle of 1000 cc engine displacement was used and floor coverings of an embodiment and a comparative example as mentioned below were produced. Actual vehicle running condition (smooth road, 100 km/h constant speed running condition) was realized by the use of a chassis dynamometer. At that time, by measuring the noise levels observed within the occupant cabin of the test vehicle, the sound insulating performance of the floor covering of the embodiment and that of the comparative example were compared and evaluated.

(3-1-2) Configuration of floor covering material:
A test sample was prepared by flattening cylindrical resin granules of polypropylene resin (of which the outer diameter D = 6.0 mm, inner diameter d = 4.0 mm, and length L = 4.0 mm), which have been subjected to the process of "roughening the inner face of the cylindrical resin granule" as described in the second embodiment, to an ellipticity of 30%, arranging a majority of the granules within a test sample, formed by using the flattened cylindrical resin granules, to be deviated from the direction of the thickness of the test sample, and molding such a sample into a test sample of the impact absorbing body with a thickness of 30 mm, a density of 0.04 g/cm³, and a projected area on the vehicle body panel of 0.15 m², and the thus prepared test sample was used as the test sample of the embodiment. Further, beaded resin granules of the same resin as the embodiment (in a spherical form with a diameter of 3 mm) were molded into a test sample of the impact absorbing body of the same shape as the test sample of the embodiment (with a thickness of 30 mm, a density of 0.04 g/cm³ 0.15 m²) and this sample was used as the test sample of the comparative example.

As the floor carpet, a tufted carpet (weight per unit area: 650 g/m²) produced by tufting pile of PET fibers into a ground fabric was used and a polyethylene resin sheet is provided as the backing on the backside (200g/ m²). Such a carpet formed into a shape to be substantially fitted over the body panel of the test vehicle was used. The air permeability of the floor carpet was 0 cc/c m²/sec. On the backside of the floor carpet, there was disposed an impact absorbing body with a thickness of 30 mm as stretched from the flat portion of the body panel to the rising wall portion, such that the projected area thereof would become 0.15 m². On the flat portion of the body panel at the back of this impact absorbing body, there was disposed, in close abutment with the impact absorbing body, a synthetic resin felt with a thickness of 20 mm (made of PET fiber, fiber diameter: 3-6 d, average fiber length: 20 - 70 mm) such that the projected area would become 0.50 m².
As the result of the comparison and evaluation of the AI value (Articulation Index) indicating the articulation of conversation made in the test vehicle, it was found that the embodiment was 0.8 point over the comparative example against the engine noise and the embodiment was 1.9 point over the comparative example against the road noise. It is thus confirmed that, if an impact absorbing body molded by using cylindrical resin granules, that the cabin stillness can be improved and the sound absorbing performance and the sound insulating capability can further be bettered.

### INDUSTRIAL APPLICABILITY

According to the present invention as described above, it has been made possible to provide an impact absorbing body capable of stably attaining good impact absorbing performance at inputting of an impact. Further, according to an impact absorbing body obtained by molding cylindrical resin granules, the sound absorbing performance and sound insulating performance can be improved while a good impact absorbing performance is maintained and, thus, cabin stillness can further be improved.

## Claims

1. An impact absorbing body disposed below feet of an occupant of an automobile as interposed between a body panel and a floor covering laid apart from the body panel toward a cabin, **characterized in that**
a plurality of load supporting portions, having V-lettered cross-sections forming grooves arranged parallel to a face facing toward the cabin of said body panel, are disposed side by side along the face facing toward the cabin of said body panel and neighboring load supporting portions are connected by a flat-plate-shaped bridge portion.

2. The impact absorbing body according to claim 1, **characterized in that** the neighboring load supporting portions are connected at ends thereof on a side toward the floor covering by the flat-plate-shaped bridge portion.

3. The impact absorbing body according to claim 1, wherein the body panel below the feet of the occupant has a flat-shaped flat portion and a rising wall portion extended obliquely upward from a front edge of the flat portion, and
each of said load supporting portions and said bridge portions are disposed over both said flat portion and said rising wall portion.

4. The impact absorbing body according to claim 1, configured such that, when energy absorbed thereby when compressed in its thickness direction is 30 J, then generated responsive load is less than 3.0 kN.

5. The impact absorbing body according to claim 1, **characterized in that** it is made from a material obtained by foaming a synthetic resin material.

6. The impact absorbing body according to claim 5, wherein each of said load supporting portion has a thickness of 6 - 15 mm and said bridge portion has a thickness of 3 - 15 mm.

7. The impact absorbing body according to claim 6, wherein a length of a face facing toward the cabin of said bridge portion in a direction parallel to the face facing toward the cabin of said body panel and also in a direction perpendicular to the groove formed by said load supporting portion is 20 - 50 mm.

8. The impact absorbing body according to claim 5, wherein a wedge angle on a cross-section of the groove formed by said load supporting portions having the V-lettered cross-section is 5 - 60°.

9. The impact absorbing body according to claim 1, **characterized in that** said bridge portion is provided therein with a plurality of through holes having a diameter of 5 - 10 mm.

10. The impact absorbing body according to claim 1, **characterized in that** it is provided by molding an aggregate of cylindrical resin granules produced by foaming a synthetic resin material and forming the foamed material into a cylindrical shape.

11. The impact absorbing body according to claim 10, **characterized in that** said cylindrical resin granule has its inner face roughened.

12. The impact absorbing body according to claim 10, wherein said cylindrical resin granule has a hollow portion formed to have a cross-section of an elliptical shape and the ellipticity of the elliptical shape is 10 - 70%.

13. The impact absorbing body according to claim 10, wherein a majority of said cylindrical resin granules within said impact absorbing body are arranged to be out of alignment with a thickness direction thereof.

14. The impact absorbing body according to claim 10, **characterized in that** it is configured to have an air permeability of 2.0 cc/cm²/sec or above in accordance with JIS L 1096.

15. The impact absorbing body according to claim 10, **characterized in that**, in a state where said impact absorbing body is laminated on a face facing toward outside the automobile of said floor covering, a laminate of said floor covering and said impact absorbing body is configured to have a permeability greater than 0 cc/cm²/sec and smaller than 90 cc/cm²/sec.

16. The impact absorbing body according to claim 10, wherein a face facing toward outside the automobile of said impact absorbing body is roughened.

17. The impact absorbing body according to claim 10, **characterized in that** it is provided by molding an aggregate of cylindrical resin granules into a form having concavities and convexities on a face thereof facing toward outside the automobile and it has a felt laminated on the concaved and convexed face facing toward outside the automobile.
